# EUROPEAN PATENT SPECIFICATION

(11) **EP 2 083 556 B1**
(45) Date of publication and mention of the grant of the patent: **10.07.2013**
(21) Application number: 09250195.6
(22) Date of filing: 26.01.2009
(51) Int. Cl.: H04W 8/26

(54) **Method of associating an identity module with first and second communication services provider**
Verfahren zum Assoziieren eines Identitätsmoduls mit einem ersten und zweiten Kommunikationsdienstanbieter
Procédé d'association d'un module d'identité à un première et deuxième fournisseur de services de communication

(30) Priority: 27.01.2008 US 20551; 29.05.2008 US 128641; 29.05.2008 US 128638
(43) Date of publication of application: 29.07.2009
(60) Divisional application: 12160184.3
(73) Proprietor: SanDisk IL Ltd., 44425 Kfar Saba (IL)
(72) Inventor: Mardiks, Eitan, Raanana 43580 (IL)
(74) Representative: White, Duncan Rohan

(56) References cited:
- WO-A-2005/074238
- WO-A1-2007/006535

## Description

### FIELD OF THE INVENTION

Various embodiments are related to a generic identity module that can be personalized after delivery to a user of a mobile telecommunications device in the course of subscribing to a provider of telecommunications services.

### BACKGROUND

A mobile telecommunications device such as a cellular telephone generally has installed within it an identity module that identifies the user to the provider of telecommunications services to which the user of the device has subscribed. Different telecommunications standards have different names for such an identity module, including: Subscriber Identity Module (SIM) in the GSM standard, Universal Integrated Circuit Card (UICC) in the UMTS standard, and Removable User Identity Module (RUIM) in the CDMA standard. The identity module has stored securely therein one or more digital strings that identify the device in which the identity module is installed with a subscriber of the telecommunications services' provider. In the case of a SIM card, these strings include a unique International Mobile Subscriber Identity (IMSI) and one or more 128-bit authentication keys (Ki).

Identity modules generally, and in particular the "generic" identity module disclosed herein, are discussed herein in terms of SIMs according to the GSM standard. However, it will be clear to those skilled in the art how to apply the principles disclosed herein to identity modules of other telecommunication standards.

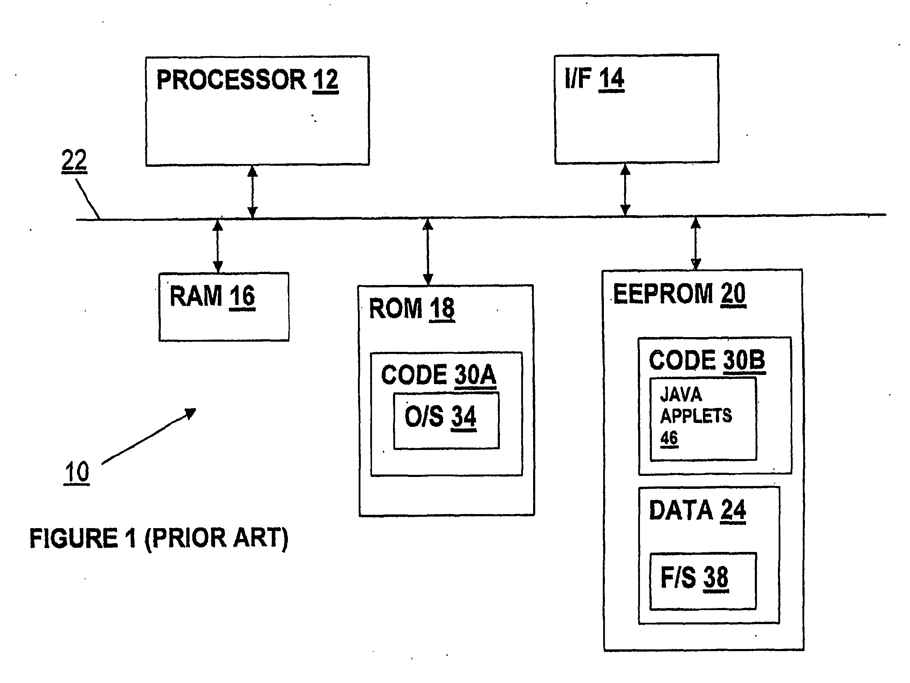

Figure 1 is a high level block diagram of a conventional SIM **10.** SIM **10** includes a processor **12,** an external interface **14,** and three memories: RAM **16,** ROM **18** and EEPROM **20,** all communicating with each other via a bus **22.** RAM **16** is used by processor **12** as a working memory, for execution of code **30** stored in ROM **18** and EEPROM **20.** Data **24,** such as a SIM file system **38,** as well as an IMSI and one or more Ki's, that personalize SIM **10** and associate SIM **10** with a provider of telecommuncation services, are stored in EEPROM **20.**

Figure 1 is a block diagram of a legacy SIM **10.** High-capacity SIMs **10** have two interfaces **14,** one for SIM functionality and the other for storage access.

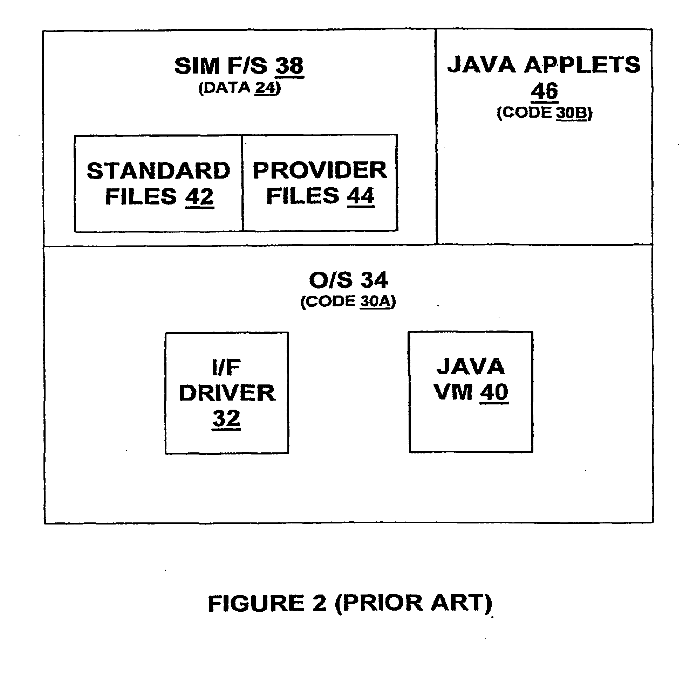

Figure 2 shows the hierarchical architecture of code **30** and its relationship to data **24.** The lower layer of code **30** is an operating system **34** that includes a driver **32** of interface **14.** (Operating system **34** of a high capacity SIM **10** would have two such drivers **32** for its two interfaces **14.**) Optionally, operating system **34** also includes a JAVA virtual machine **40.** Operating system **34** includes, *inter alia,* communication code that is executed by processor **12** in support of communication between the mobile telecommunications device, wherein SIM **10** is installed, and the telecommunications network of the provider that SIM **10** associates with the mobile telecommunications device. Above operating system **34** are SIM file system **38** and provider-specific JAVA applets **46.** SIM file system **38** includes standard files **42** that are defined by the GSM standard and provider-defined files **44** that are specific to the provider. Some of standard files **42** and provider-defined files **44** are an electrical profile of SIM **10.** Figure 1 shows that code **30** is distributed between code portion **30A** in ROM **18** and code portion **30B** in EEPROM **20.** JAVA applets **46** are considered herein to be a part of code **30** and are stored in EEPROM 20. The remaing part of code **30** is stored in ROM **18.** File system **38** is stored in EEPROM 20.

A SIM manufacturer contracting with a telecommunications service provider to provide devices such as SIM 10, installs all of code 30 and data 24 in SIM 10. Each such SIM **10** has unique data **24** (*e*.*g*. a unique IMSI and one or more unique Ki's) that, after the telecommunications services provider provides the SIM **10** to a subscriber, identifies the telecommunications device in which that SIM **10** is installed as belonging to that subscriber.

Initially, before being associated with a specific telecommunications services provider, each SIM **10** is generic. It would be highly advantageous to be able to sell such generic SIMs directly to users, and have the SIMs be personalized for the users as part of the procedure by which the users subscribe to their selected telecommunications services providers. Such generic SIMs could be sold by vendors who are not associated with specific telecommunications providers.

WO-A-2005/074238 discloses a calling card for accessing a telephone network having memory storage means that has been programmed and encrypted to store at least one of: a memory field for holding telephone service provider information, an access code for writing to a memory field for holding dialling information and subscriber identification, and a memory field for holding dialling information and subscriber identification; wherein the memory fields and access code are independently accessible and programmable with encryption capability.

WO 2007/066535 discloses a system for associating a secure multimedia card with a telecommunications services provider. In a first step an application emulating a telecommunications card is downloaded from a provider, followed by personalising data required for use of a mobile radio network.

### SUMMARY OF The invention

According to an aspect of the present invention there is provided an identity module comprising an interface configured to be coupled to a host and a memory comprising executable installation code. The executable installation code is executable to receive a first provider profile via a host to which the identity module is coupled. The host is connected to a communication network. The first provider profile is associated with a first communication services provider. The executable installation code is further executable to install in the memory the first provider profile. The first provider profile associates the identity module with the first communication services provider when the first profile is installed in the memory. Prior to installing the first provider profile the memory is devoid of identification information associating the identity module with the first communication services provider. The executable installation code is further executable to receive a second provider profile via a host to which the identity module is coupled. The host is connected to a communication network. The second provider profile is associated with a second communication services provider. The executable installation code is further executable to install in the memory the second provider profile in addition to the first provider profile. The second provider profile associates the identity module with the second communication services provider when the second profile is installed in the memory. Prior to installing the second provider profile the memory is devoid of identification information associating the identity module with the second communication services provider. The identity module further comprises a processor operative to execute the executable installation code to cause the identity module to be associated with the first and second communication services providers.

According to another aspect of the present invention there is provided a method of associating an identity module with first and second communication services providers. The identity module comprises an interface configured to be coupled to a host, a memory comprising executable installation code and a processor operative to execute the executable installation code. The method comprises using the processor to execute the installation code to receive a first provider profile via a host to which the identity module is coupled, the host connected to a communication network. The first provider profile is associated with a first communication services provider. The method further comprises using the processor to execute the installation code to install in the memory the first provider profile, wherein the first provider profile associates the identity module with the first communication services provider when the first profile is installed in the memory, and wherein prior to installing the first provider profile, the memory is devoid of identification information associating the identity module with the first communication services provider. The method further comprises using the processor to execute the installation code to receive a second provider profile via a host to which the identity module is coupled, the host connected to a communication network, wherein the second provider profile is associated with a second communication services provider, and to install in the memory the second provider profile in addition to the first provider profile, wherein the second provider profile associates the identity module with the second communication services provider when the second profile is installed in the memory, and wherein prior to installing the second provider profile, the memory is devoid of identification information associating the identity module with the second communication services provider.

Preferably, the memory also has stored therein executable solicitation code for requesting the provider profile. Most preferably, the executable solicitation code is adapted to be executed by the processor. Also most preferably, the executable solicitation code includes executable code for establishing a secure channel for communicating with a provider of the provider profile.

Preferably, the memory is non-volatile.

Preferably, the executable installation code includes executable code for substituting, for a first provider profile that associates the identity module with a first communication services provider and that is already installed in the memory, a second provider profile that associates the identity module with a second communication services provider. Following the substitution, a host of the identity module communicates using the services of the second communication services provider instead of the services of the first communication services provider. Subsequently, the same executable code may be used to substitute, for the second provider profile, a third provider profile that associates the identity module with a third communication services provider, and so on. Alternatively, the executable installation code includes executable code that installs the second provider profile in the memory in addition to the first provider profile. Following the installation of the second provider profile, a host of the identity module can communicate using the services of either communication services provider.

Preferably, the memory also has installed therein executable deletion code for removing the provider profile from the memory, thereby restoring the identity module to its original condition of not being associated with a specific communication services provider.

An exemplary server for personalizing such an identify module includes a communication interface, a memory and a processor. The communication interface is for communicating with a host of the identity module. In the memory is stored executable installation code for providing to the host a customization suite that includes substantially all of the provider profile. The processor is for executing the executable installation code.

Preferably, the communication interface is an interface to a telecommunication network such as a telephony network or an internetwork.

Preferably, the executable installation code of the server is for providing the customization suite to the host contingent on satisfaction of a condition such as validation of credentials, such as a credit card number, of the entity that is requesting the customization suite.

Preferably, the server memory also has stored therein executable solicitation code for establishing a secure channel to the host for providing the customization suite to the host.

The identity module is initially configured without any portion of a provider profile and the identity module so configured may be offered for sale, directly or indirectly, to a potential subscriber of a communication services provider. This is as opposed to offering the identity module for sale to the communications services provider itself:

Also disclosed as an example suitable for understanding the invention is a method of recruiting a new subscriber to a communication services provider, including: (a) receiving a request to provide a customization suite for installing substantially all of a provider profile in an identity module in order to associate the identity module with a communication services provider, thereby enabling the identity module to support communication services provided by the communication services provider, the request being received from a host of the identity module, the identity module lacking any portion of the provider profile; (b) responding to the request by proposing to the host terms of usage of the communication services; and (c) upon receiving from the host a consent to the terms of usage, sending the customization suite to the host.

In an exemplary method of recruiting a new subscriber to a communication services provider, a request is received to provide a customization suite for installing substantially all of a provider profile in an identity module in order to associate the identity module with the communication services provider. With the provider profile installed therein, the identity module supports communication services provided by the communication services provider. The request is received from a host of the identity module, such as a cellular telephone or a computer equipped with a card reader- When the request is received, no portion of the provider profile is installed in the identity module. Then, the request is responded to by proposing to the host terms of usage of the communication services. Upon receiving consent to the terms of usage from the host, the customization suite is sent to the host.

Preferably, the examplary method also includes establishing a secure channel to the host The customization suite is sent to the host via the secure channel.

Preferably, the consent includes a credential such as a credit card number.

The method includes validating the credential. The sending of the customization suite to the host is conditional on the credential being valid.

Preferably, the receiving of the request, the responding to the request and the sending of the customization suite are via a telecommunication network such as a telephony network or an internetwork.

Herein is presented as an example suitable for understanding the invention a method of doing business, including: (a) obtaining an identity module for using a host, wherein the identity module is operationally connected, to communicate using communication, services provided by a communication services provider when the identity module has installed therein a provider profile that associates the identity module with the communication services provider, the identity modules initially lacking any portion of any such provider profile; and (b) offering the identity module for sale to a potential subscriber of such a communication services provider. The exemplary method may also include requesting one such provider profile on behalf of the potential subscriber.

An exemplary method of doing business includes obtaining an identity module that initially lacks any portion of any provider profile that associates the identity module with any communication services provider, and offering the identity module for sale to a potential subscriber of one such communication services provider. This is as opposed to offering such an identity module for sale to a communication services provider for personalization by the communication services provides. Preferably, the exemplary method also includes requesting a provider profile on behalf of the potential subscriber.

### BRIEF DESCRIPTION OF THE DRAWINGS

The generic identity module is herein described, by way of example only, with reference to the accompanying drawings, wherein:
FIG. 1 is a high-level block diagram of a conventional SIM;
FIG. 2 shows the hierarchical architecture of the code of a conventional SIM;
FIG. 3 is a high-level block diagram of an embodiment of a generic, pre-customization SIM;
FIGs. 4A and 4C show the hierarchical architectures of the codes and data of two different generic SIMs prior to the installation of provider profiles;
FIG. 4B shows the hierarchical architecture of the code and data of the generic SIM of FIG. 4A after the installation of a provider profile;
FIG. 5 shows the exchange of signals between a generic SIM and a server for requesting a provider profile;
FIG. 6 is a high-level block diagram of a generic SIM in a cellular telephone requesting a provider profile from a server;
FIG. 7 shows the hierarchical architecture of the code and data of a generic SIM after the installation of two provider profiles;
FIG. 8 is a high-level block diagram of a generic SIM coupled by a card reader to a computer requesting a provider profile from a server.

The principles and operation of a generic identity module may be better understood with reference to the drawings and the accompanying description.

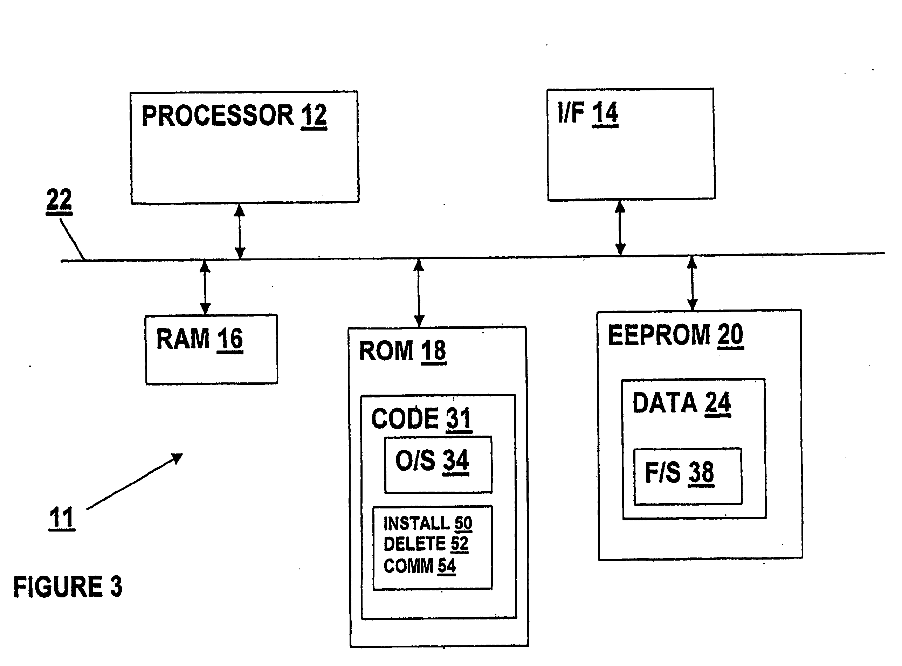

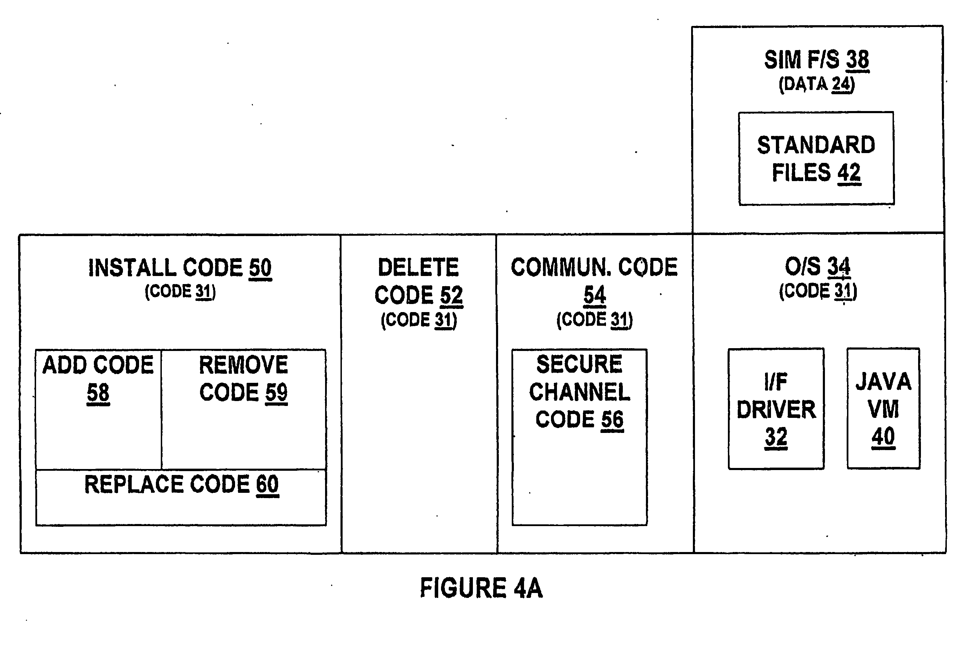

Referring again to the drawings, Figure 3 illustrates a generic SIM **11** that can be personalized at will for a user. SIM **11** is identical to SIM **10,** except that code **30** is replaced with modified code **31.** Figure 4A shows the hierarchical architecture of code **31** of an exemplary embodiment of such a generic SIM and its relation to data **24.**

Like code **30** and data **24** of Figure 2, code **31** and data **24** of Figure 4A includes an operating system **34** with a driver **32** of interface **14** and a JAVA virtual machine **40,** and a SIM file system **38** with standard files **42** but does not include either provider-defined SIM files **44** or any JAVA applets **46.** Instiead, code **31** of Figure 4A includes installation code **50** for installing, in EEPROM **20** of SIM 11, the portion of code **30** and data **24** of Figure 2 (provider-defined files **44** and JAVA applets 46) that associates conventional SIM **10** with a specific telecommunications services provider, and also for installing, in EEPROM **20** of SIM 11, data 24 that personalize SIM **11** for a specific subscriber of the telecommunications services provider. Installation code **50** is functionally equivalent to the code that a manufacturer of SIM **10** uses to install provider-defined files **44,** JAVA applets **40** and the rest of data **24** in SIM **10.**

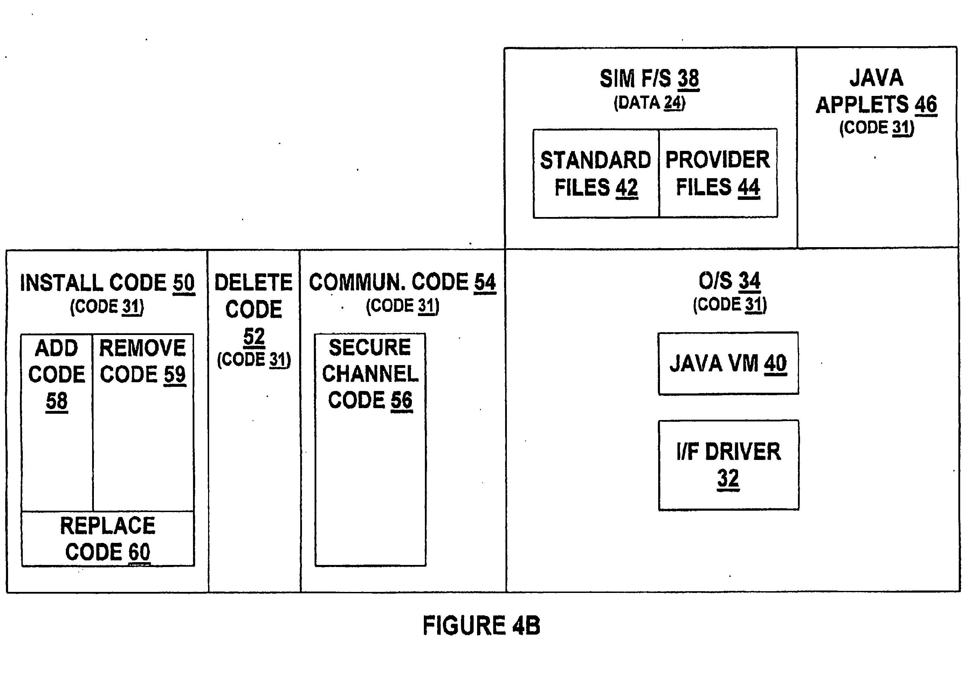

After processor **12** has executed installation code **50,** the hierarchical architecture of **code 31** and its relation to data **24** is as illustrated in Figure 4B.

Hence, provider-defined portion **44,** JAVA applets **46** and the related data **24** are referred to collectively herein as a "provider profile" that associates SIM **11** with a specific subscriber of a specific telecommunications services provider.

In order to obtain the provider profile for installation, SIM **11** also includes communication, code **54** that is executed by processor **12** and by a host such as a cellular telephone. While SIM **11** is installed in the host, the host executes the relevant portion of communication code **54** along with its own code to follow a data communication protocol such as GPRS to communicate with a server that is associated with the telecommunications services provider and request the provider profile.

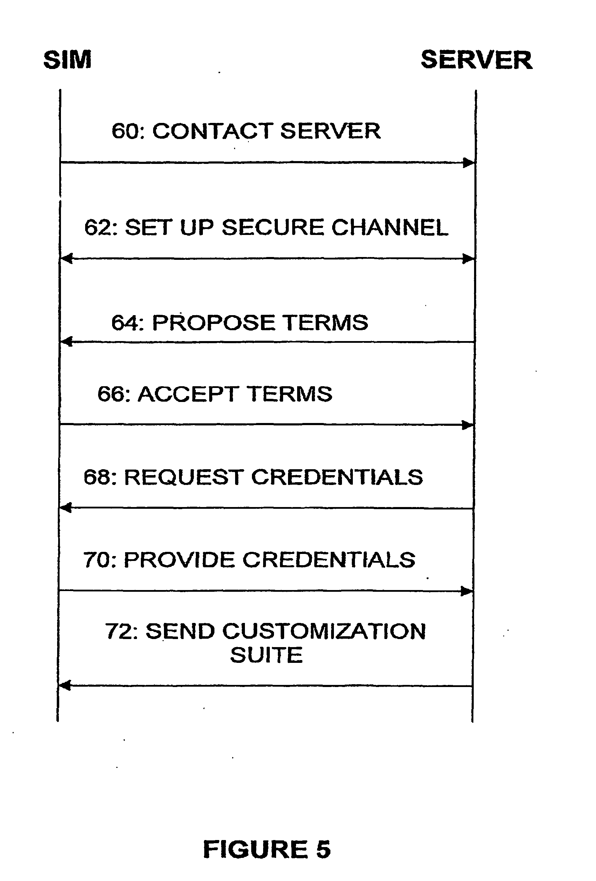

Figure 5 shows the exchange of signals between SIM **11** and a server for requesting a provider profile. In step **60**, the user uses the cellular telephone in which SIM **10** is installed to initiate communication with the server. In step **62,** SIM **11** and the server set up a secure channel for uploading user credentials to the server and downloading the provider profile to SIM **11,** using methods known in the art that need not be detailed here. For that purpose, communication code **54** includes code **56** for setting up the secure channel. In step **64,** the server proposes terms of usage to SIM 11. If the user decides to accept the proposed terms of usage, in step **66** the user uses the cellular telephone in which SIM **11** is installed to send a message to the server indicating acceptance of the terms of usage. In step **68,** the server requests user credentials, such as a mailing address and a credit card number, for registering the user as a subscriber to the telecommunications services provider with which the server is associated In step **70,** the user uses the cellular telephone in which SIM **11** is installed to send the requested credentials to the server. In step **72,** having authenticated the user credentials, the server sends a "customization suite" to SIM **11.** The customization suite includes the provider-specific data (both data generic to the provider and data such as an IMSI and one or more authentication keys that are specific to SIM **11**) that SIM **11** needs for executing installation code **50** to install the provider profile. Optionally, the customization suite also includes provider-specific instructions (*e*.*g*. in the forum of a script) that supplement installation code **50.** Processor **12** executes communication code **54** to effect the SIM-11-side portion of the provider profile request.

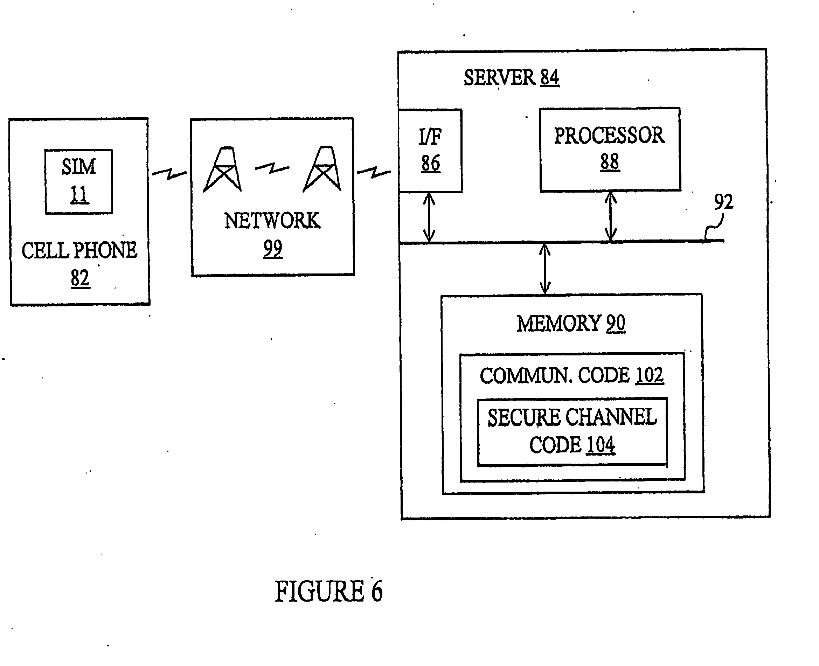

Figure 6 shows SIM **11,** installed in a cellular telephone **82,** communicating with a server **84** via a cellular telephony network **99** to effect the steps illustrated in Figure 5. Server **84** includes, among other components, an interface **86** to network **99,** a memory **90** wherein is stored code **102** for implementing the server-side steps of Figure 5, and a processor **88** for executing code **102.** Interface **86,** memory **90** and processor **88** communicate with each other via a bus **92.** Code **102** includes, *inter alia,* secure channel code **104** that is similar to secure channel code **56.**

Figures 4A and 4B also show code **31** of a generic SIM **10** as including deletion code **52** and as including, in installation code **50**: a module **58** for adding to SIM **11** a second provider profile of a second telecommunications services provider (in addition to a first provider profile of a first telecommunications services provider that is already installed in SIM **11**); a module **59** for deleting a provider profile from SIM **11**; and a module **60** for substituting in SIM **11** a second provider profile of a second telecommunications services provider for a first provider profile of a first telecommunications services provider (that is already installed in SIM **11**).

In some arrangements of a generic SIM **11** not in accordance with the present invention, modules **58, 59** and **60** may be absent and deletion code **52** may be executed automatically, upon the successful completion of personalization of SIM **11,** to delete installation code **50,** communication code **54** and deletion code **52** itself.

Subsequent to such deletion, the hierarchical structure of code **31** then is the same as that of code **30** of the prior art, as illustrated in Figure 2. In other embodiments of a generic SIM **11,** the execution of deletion code **52** may be optional.

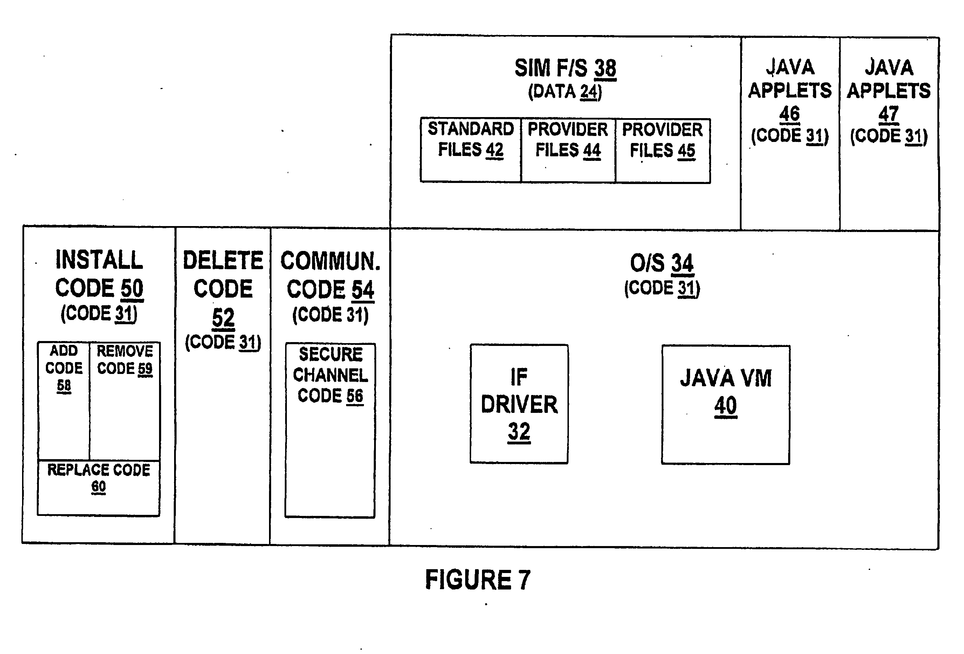

Module **58** gives the user the option of subscribing to two or more different telecommunications services providers at the same time. Executing module **58** effects the steps illustrated in Figure 5 to add a second provider profile to SIM **11.** The hierarchical architecture of code **31** after such an addition is illustrated in Figure 7. In addition to files **44** and JAVA applets **46** that are specific to the first telecommunications provider, code **31** and data **24** now include files 45 and JAVA applets **47** of the second telecommunications provider. Module **59** gives the user the option of deleting any or all of the installed provider profiles from SIM **11.** Module **60** gives the user the option of substituting the provider profile of a second telecommunications provider for the provider profile of a first telecommunications provider. Executing module **60** executes module **59** to delete an installed provider profile and then effects the steps illustrated in Figure 5 to install the new provider profile.

Server **84** of Figure 6 may be owned either by the manufacturer of generic SIM cards **11** or by a telecommunications services provider. If server **84** is owned by the manufacturer of generic SIM cards **11** then server **84** provides subscription services for telecommunications services providers that have made the appropriate arrangements with the manufacturer of generic SIM cards **11.** In step **60** of Figure 5, in addition to calling server **84,** the user also specifies which telecommunications services provider the user wishes to subscribe to. In step **72** of Figure 5, in addition to sending the user the provider profile, server **84** also sends the user's credentials to the selected telecommunications services provider, via cellular telephony network **94.** If server **84** is owned by a telecommunications services provider, for example if the manufacturer of generic SIM cards **11** has sold server **84** to the telecommunications services provider, then in step **70** of Figure 5, upon receiving the user's credentials, the telecommunication services provider sets up an account for the user.

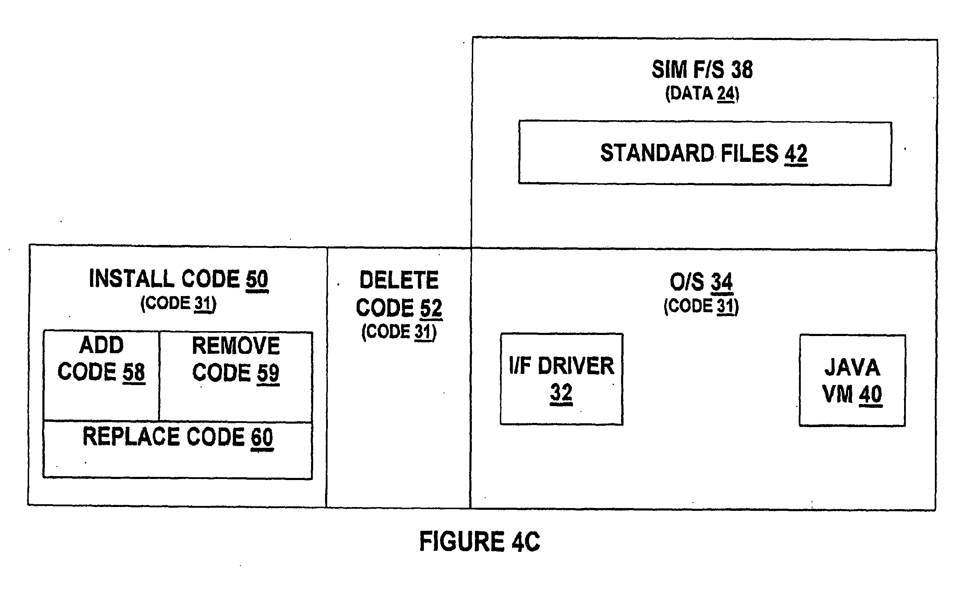

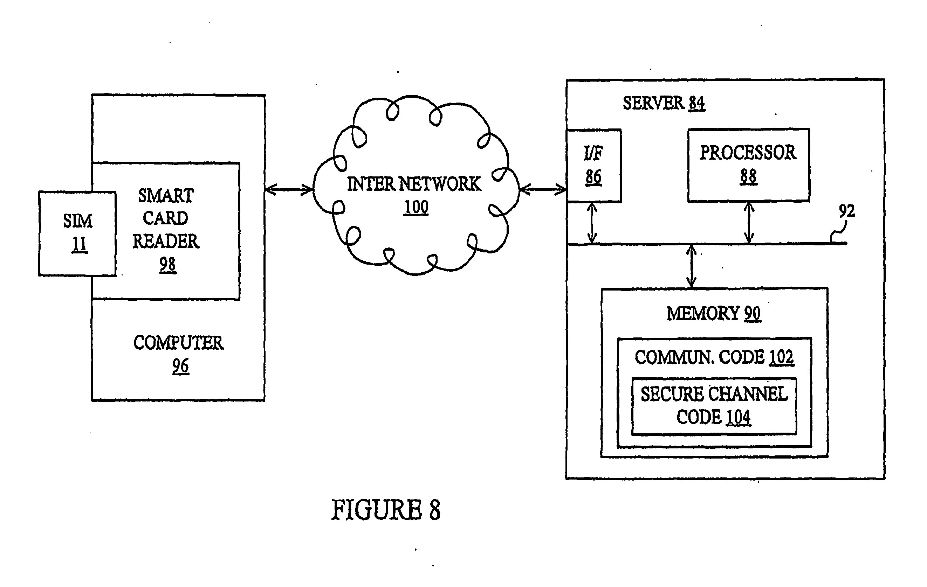

Figure 8 shows an alternative mechanism for establishing communication, between SIM **11** and server **84.** In Figure 8, the host of SIM **11** is a computer **96** equipped with a smart card reader **98** to which SIM **11** is operationally coupled via its interface **14.** Computer **96** communicates with server **84** via an internetwork **100** such as the Internet Computer **96** would be used, for example, by a retail vendor of generic smart cards **11** who offers generic smart cards **11** for sale to users and who personalizes generic smart cards **11** for users who purchase generic smart cards **11**. The manufacturer of generic smart cards **11**, in turn offers generic smart cards **11** for sale to such retail vendors, instead of or in addition to offering conventional SIMs **10** for sale to telecommunications services providers. Optionally, code **54** for communicating with server **84** resides in computer **96** rather than in generic smart cards **11;** the corresponding hierarchical architecture of code **31** of such a generic smart cards **11** is shown in Figure 4C.

Yet another mechanism (not illustrated) for establishing communication between SIM **11** and server **84** may be a blend of the two mechanisms illustrated in Figures 6 and 8. In this mechanism, cell phone **82** communicates with server **84** via computer **96,** using *e.g*. USB to communicate with computer **96.**

While the invention has been described with respect to a limited number of embodiments, it will be appreciated that many variations, modifications and other applications of the invention may be made. Therefore, the claimed invention as recited in the claims that follow is not limited to the embodiments described herein.

## Claims

1. An identity module (11) coxnprising:
an interface (14) configured to be coupled to a host (96);
a memory (18, 20) comprising executable installation code (50, 54) that is executable to:
receive a first provider profile via a host (96) to which the identity module (11) is coupled, the host connected to a communication, network (99; 100), wherein the first provider profile is associated with a first communication services provider;
install in the memory (18, 20) the first provider profile, wherein the first provider profile associates the identity module (11) with the first communication services provider when the first profile is installed in the memory (18, 20), and wherein prior to installing the first provider profile, the memory (18, 20) is devoid of identification information associating the identity module (11) with the first communication services provider;
receive a second provider profile via a host (96) to which the identity module (11) is coupled, the host connected to a communication network (99; 100), wherein the second provider profile is associated with a second communication services provider; and
install in the memory (18, 20) the second provider profile in addition to
the first provider profile, wherein the second provider profile associates the identity module (11) with the second communication services provider when the second profile is installed in the memory (18, 20), and wherein prior to installing the second provider profile, the memory (18, 20) is devoid of identification information associating the identity module (11) with the second communication services provider; and
a processor (12) operative to execute the executable installation code to cause
the identity module (11) to be associated with the first and second communication services providers.

2. The identity module of claim 1, wherein the memory (18, 20) is further to store solicitation code to request the first provider profile.

3. The identity module of claim 2, wherein the solicitation code includes executable code to establish a secure channel to communicate with the provider of the first provider profile.

4. The identity module of claim 1, wherein the memory is further to store executable deletion code (52) that is executable to remove the installation code (50, 54) from the memory.

5. The identity module of any one of claims 1 to 4, wherein the host (96) is to provide a payment credential to the first communication services provider prior to the processor (12) receiving the first provider profile and wherein the host is operative to receive terms of usage from the first communication services provider prior to providing the payment credential.

6. A method of associating an identity module (11) with first and second communication services providers, the identity module comprising an interface (14) configured to be coupled to a host (96), a memory (18, 20) comprising executable installation code (50, 54) and a processor (12) operative to execute the executable installation code, the method comprising using the processor to execute the installation code (50, 54) to:
receive a first provider profile via a host (96) to which the identity
module (11) is coupled, the host connected to a communication network (99; 100), wherein the first provider profile is associated with a first communication, services provider;
install in the memory (18, 20) the first provider profile, wherein the
first provider profile associates the identity module (11) with the first communication services provider when the first profile is installed in the memory (18, 20), and wherein prior to installing the first provider profile, the memory (18, 20) is devoid of identification information associating the identity module (11) with the first communication services provider;
receive a second provider profile via a host (96) to which the identity
module (11) is coupled, the host connected to a communication network (99; 100), wherein the second provider profile is associated with a second communication services provider; and
install in the memory (18, 20) the second provider profile in addition to
the first provider profile, wherein the second provider profile associates the identity module (11) with the second communication services provider when the second profile is installed in the memory (18, 20), and wherein prior to installing the second provider profile, the memory (18, 20) is devoid of identification information associating the identity module (11) with the second communication services provider

7. The method of claim 6, further comprising executing solicitation code stored in the memory, the solicitation code including executable code to establish a secure channel to communicate with the provider of the first provider profile.

8. The method of claim 6, further comprising executing deletion code (52) stored in the memory to remove the installation code (50, 54) from the memory.

9. The method of claims 6, 7 or 8, further comprising providing, via the host (96), a payment credential to the first communication services provider prior to receiving the first provider profile, wherein the host (96) is operative to receive terms of usage from the first communication services provider prior to providing the payment credential.

## Patentansprüche

1. Identitatsmodul (11), umfassend
eine Schnittstelle (14), die dafür konfiguriert ist, mit einem Host (96) gekoppelt zu werden,
einen Speicher (18, 20), der ausführbaren Installationscode (50, 54) umfasst, der ausführbar ist zum:
Empfangen eines ersten Anbieterprofils über einen Host (96), mit dem das Identitätsmodul (11) gekoppelt ist, wobei der Host mit einem Kommunikationsnetzwerk (99, 100) verbunden ist, worin das erste Anbieterprofil mit einem ersten Kommunikationsdienstanbieter verknüpft ist,
Installieren des ersten Anbieterprofils im Speicher (18, 20), worin das erste Anbieterprofil das Identitatsmodul (11) mit dem ersten Kommunikationsdienstanbieter verknüpft, wenn das erste Profil im Speicher (18, 20) installiert ist, und worin vor dem Installieren des ersten Anbieterprofils der Speicher (18, 20) frei von Identifizierungsinformation ist, die das Identitätsmodul (11) mit dem ersten Kommunikationsdienstanbieter verknüpft,
Empfangen eines zweiten Anbieterprofils über einen Host (96), mit dem das Identitätsmodul (11) gekoppelt ist, wobei der Host mit einem Kommunikationsnetzwerk (99, 100) verbunden ist, worin das zweite Anbieterprofil mit einem zweiten Kommunikationsdienstanbieter verknüpft ist, und
Installieren des zweiten Anbieterprofils im Speicher (18, 20) zusätzlich zum ersten Anbieterprofil, worin das zweite Anbieterprofil das identitätsmodul (11) mit dem zweiten Kommunikationsdienstanbieter verknüpft, wenn das zweite Profil im Speicher (18, 20) installiert ist, und worin vor dem Installieren des zweiten Anbieterprofils der Speicher (18, 20) frei von Identifizierungsinformation ist, die das Identitätsmodul (11) mit dem zweiten Kommunikationsdienstanbieter verknüpft, und
einen Prozessor (12), der betriebsfähig ist, den ausführbaren Installationscode auszuführen, um zu bewirken, dass das Identitatsmodul (11) mit dem ersten und dem zweiten Kommunikationsdienstanbieter verknüpft wird.

2. Identitätsmodul nach Anspruch 1, worin der Speicher (18, 20) ferner dazu dient, Antragscode zu speichern, um das erste Anbieterprofil anzufordern

3. Identitätsmodul nach Anspruch 2, worin der Antragscode ausführbaren Code umfasst, um einen sicheren Kanal einzurichten, um mit dem Anbieter des ersten Anbieterprofils zu kommunizieren

4. Identitätsmodul nach Anspruch 1, worin der Speicher ferner dazu dient, ausführbaren Löschcode (52) zu speichern, der ausführbar ist, um den Installationscode (50, 54) vom Speicher zu löschen.

5. Identitätsmodul nach einem der Ansprüche 1 bis 4, worin der Host (96) dazu dient, eine Bezahlungsbeglaubigung an den ersten Kommunikationsdienstanbieter zu übergeben, bevor der Prozessor (12) das erste Anbieterprofil empfängt, und worin der Host betriebsfähig ist, Nutzungsbestimmungen vom ersten Kommunikationsdienstanbieter zu empfangen, bevor die Bezahlungsbeglaubigung übergeben wird.

6. Verfahren zum Verknüpfen eines Identitätsmoduls (11) mit ersten und zweiten Kommunikationsdienstanbietem, wobei das Identitätsmodul umfasst: eine Schnittstelle (14), die dafür konfiguriert ist, mit einem Host (96) gekoppelt zu werden, einen Speicher (18, 20), der ausführbaren Installationscode (50, 54) umfasst, und einen Prozessor (12), der betriebsfähig ist, den ausführbaren Installationscode auszuführen; wobei das Verfahren umfasst: Verwenden des Prozessors, um den Installationscode (50, 54) auszuführen zum:
Empfangen eines ersten Anbieterprofils über einen Host (96), mit dem das Identitätsmodul (11) gekoppelt ist, wobei der Host mit einem Kommunikationsnetzwerk (99; 100) verbunden ist, worin das erste Anbieterprofil mit einem ersten Kommunikationsdienstanbieter verknüpft ist;
Installieren des ersten Anbietetprofils im Speicher (18, 20), worin das erste Anbieterprofil das Identitätsmodul (11) mit dem ersten Kommunikationsdienstanbieter verknüpft, wenn das erste Profil im Speicher (18, 20) installiert ist, und worin vor dem Installieren des ersten Anbieterprofils der Speicher (18, 20) frei von Identifizierungsinformation ist, die das Identitätsmodul (11) mit dem ersten Kommunikationsdienstanbieter verknüpft;
Empfangen eines zweiten Anbieterprofils über einen Host (96), mit dem das Identitätsmodul (11) gekoppelt ist, wobei der Host mit einem Kommunikationsnetzwerk (99; 100) verbunden ist, worin das zweite Anbieterprofil mit einem zweiten Kommunikationsdienstanbieter verknüpft ist; und
Installieren des zweiten Anbieterprofils im Speicher (18, 20) zusätzlich zum ersten Anbieterprofil, worin das zweite Anhieterprofil das Identitätsmodul (11) mit dem zweiten Kommunikationsdienstanbieter verknüpft, wenn das zweite Profil im Speicher (18, 20) installiert ist, und worin vor dem Installieren des zweiten Anbieterprofils der Speicher (18, 20) frei von Identifizierungsinformation ist, die das Identitätsmodul (11) mit dem zweiten Kommunikationsdienstanbieter verknüpft.

7. Verfahren nach Anspruch 6, ferner umfassend: Ausführen von Antragscode, der im Speicher gespeichert ist, worin der Antragscode ausführbaren Code umfasst, um einen sicheren Kanal einzurichten, um mit dem Anbieter des ersten Anbieterprofils zu kommunizieten.

8. Verfahren nach Anspruch 6, ferner umfassend Ausführen von Loschcode (52), der im Speicher gespeichert ist, um den Installationscode (50, 54) vom Speicher zu loschen

9. Verfahren nach Anspruch 6, 7 oder 8, ferner umfassend über den Host (96) erfolgendes Übergeben einer Bezahlungsbeglaubigung an den ersten Kommunikationsdienstanbieter vor dem Empfangen des ersten Anbieterprofils, worin der Host (96) betriebsfähig ist, Nutzungsbestimmungen vom ersten Kommunikationsdienstanbieter zu empfangen, bevor die Bezahlungsbeglaubigung übergeben wird.

## Revendications

1. Module d'identité (11), comprenant:
une interface (14) configurée de manière à être couplée à un hôte (96) ;
une mémoire (18, 20) comprenant un code d'installation exécutable (50, 54) qui est exécutable de manière à :
recevoir un premier profil de fournisseur par l'intermédiaire d'un hôte (96) auquel le module d'identité (11) est couplé, l'hôte étant connecté à un réseau de communication (99 ; 100), dans lequel le premier profil de fournisseur est associé à un premier fournisseur de services de communication ;
installer, dans la mémoire (18, 20), le premier profil de fournisseur, dans lequel le premier profil de fournisseur associe le module d'identité (11) au premier fournisseur de services de communication lorsque le premier profil est installé dans la mémoire (18, 20), et dans lequel, avant l'installation du premier profil de fournisseur, la mémoire (18, 20) est dépourvue d'informations d'identification associant le module d'identité (11) au premier fournisseur de services de communication ;
recevoir un second profil de fournisseur par l'intermédiaire d'un hôte (96) auquel le module d'identité (11) est couplé, l'hôte étant connecté à un réseau de communication (99 ; 100), dans lequel le second profil de fournisseur est associé à un second fournisseur de services de communication ; et
installer, dans la mémoire (18, 20), le second profil de fournisseur, outre le premier profil de fournisseur, dans lequel le second profil de fournisseur associe le module d'identité (11) au second fournisseur de services de communication lorsque le second profil est installé dans la mémoire (18, 20), et dans lequel, avant l'installation du second profil de fournisseur, la mémoire (18, 20) est dépourvue d'informations d'identification associant le module d'identité (11) au second fournisseur de services de communication ; et
un processeur (12) exploitable de manière à exécuter le code d'installation exécutable, en vue d'amener le module d'identité (11) à être associé aux premier et second fournisseurs de services de communication.

2. Module d'identité selon la revendication 1, dans lequel la mémoire (18, 20) est en outre destinée à stocker un code de sollicitation destiné à demander le premier profil de fournisseur.

3. Module d'identité selon la revendication 2, dans lequel le code de sollicitation inclut un code exécutable destiné à établir un canal sécurisé permettant de communiquer avec le fournisseur du premier profil de fournisseur.

4. Module d'identité selon la revendication 1, dans lequel la mémoire est en outre destinée à stocker un code de suppression exécutable (52), lequel est exécutable en vue de supprimer le code d'installation (50, 54) de la mémoire.

5. Module d'identité selon l'une quelconque des revendications 1 à 4, dans lequel l'hôte (96) est destiné à fournir des informations d'identification de paiement au premier fournisseur de services de communication, avant que le processeur (12) ne reçoive le premier profil de fournisseur, et dans lequel l'hôte est exploitable de manière à recevoir des modalités d'utilisation en provenance du premier fournisseur de services de communication, avant de fournir les informations d'identification de paiement.

6. Procédé d'association d'un module d'identité (11) à des premier et second fournisseurs de services de communication, le module d'identité comprenant une interface (14) configurée de manière à être couplée à un hôte (96), une mémoire (18, 20) comprenant un code d'installation exécutable (50, 54) et un processeur (12) exploitable de manière à exécuter le code d'installation exécutable, le procédé comprenant l'utilisation du processeur pour exécuter le code d'installation (50, 54) en vue de :
recevoir un premier profil de fournisseur par l'intermédiaire d'un hôte (96) auquel le module d'identité (11) est couplé, l'hôte étant connecté à un réseau de communication (99 ; 100), dans lequel le premier profil de fournisseur est associé à un premier fournisseur de services de communication ;
installer, dans la mémoire (18, 20), le premier profil de fournisseur, dans lequel le premier profil de fournisseur associe le module d'identité (11) au premier fournisseur de services de communication lorsque le premier profil est installé dans la mémoire (18, 20), et dans lequel, avant l'installation du premier profil de fournisseur, la mémoire (18, 20) est dépourvue d'informations d'identification associant le module d'identité (11) au premier fournisseur de services de communication ;
recevoir un second profil de fournisseur par l'intermédiaire d'un hôte (96) auquel le module d'identité (11) est couplé, l'hôte étant connecté à un réseau de communication (99 ; 100), dans lequel le second profil de fournisseur est associé à un second fournisseur de services de communication ; et
installer, dans la mémoire (18, 20), le second profil de fournisseur, outre le premier profil de fournisseur, dans lequel le second profil de fournisseur associe le module d'identité (11) au second fournisseur de services de communication lorsque le second profil est installé dans la mémoire (18, 20), et dans lequel, avant l'installation du second profil de fournisseur, la mémoire (18, 20) est dépourvue d'informations d'identification associant le module d'identité (11) au second fournisseur de services de communication.

7. Procédé selon la revendication 6, comprenant en outre l'exécution d'un code de sollicitation stocké dans la mémoire, le code de sollicitation comportant un code exécutable, de manière à établir un canal sécurisé permettant de communiquer avec le fournisseur du premier profil de fournisseur.

8. Procédé selon la revendication 6, comprenant en outre l'exécution d'un code de suppression (52) stocké dans la mémoire, en vue de supprimer le code d'installation (50, 54) de la mémoire.

9. Procédé selon les revendications 6, 7 ou 8, comprenant en outre la fourniture, par l'intermédiaire de l'hôte (96), d'informations d'identification de paiement, au premier fournisseur de services de communication, avant de recevoir le premier profil de fournisseur, dans lequel l'hôte (96) est exploitable de manière à recevoir des modalités d'utilisation en provenance du premier fournisseur de services de communication, avant de fournir les informations d'identification de paiement.
